# FASCICULE DE BREVET EUROPEEN

(11) **EP 2 239 454 B1**
(45) Date de publication et mention de la délivrance du brevet: **29.07.2015**
(21) Numéro de dépôt: 10155888.0
(22) Date de dépôt: 09.03.2010
(51) Int. Cl.: F02N 11/08, F02N 11/10

(54) **Procédé de protection thermique d'un système d'arrêt/relance automatique de moteur thermique et système l'utilisant**
Verfahren zum Wärmeschutz eines automatischen Abschalt-/Wiedereinschaltsystems einer Wärmekraftmaschine, und System, das dieses Verfahren einsetzt
Method for thermal protection of a system for automatically stopping/restarting a heat engine and system using the same

(30) Priorité: 10.04.2009 FR 0952377
(43) Date de publication de la demande: 13.10.2010
(73) Titulaire: Valeo Equipements Electriques Moteur, 94046 Créteil Cedex (FR)
(72) Inventeur: Taspinar, Ertugrul, 94370, Sucy-en-Brie (FR); Chupin, Paul-Eric, 92500, Rueil-Malmaison (FR); Compaore, Fabrice, 92500, Rueil-Malmaison (FR); Gareil, Benoit, 62360, Saint Leonard (FR); Laurence, Magali, 75012, Paris (FR)

(56) Documents cités:
- EP-A2- 1 580 424
- WO-A1-99/15770
- WO-A1-2006/125872
- FR-A1- 2 797 530
- US-A- 4 577 599
- US-A- 5 637 054
- US-A- 6 054 826

## Description

La présente invention se rapporte au domaine automobile et concerne plus particulièrement la protection thermique au démarrage du moteur thermique d'un véhicule dans un système d'arrêt/relance automatique du moteur thermique.

Il est connu un système d'arrêt/relance automatique comportant une machine électrique tournante réversible de type alterno-démarreur couplée à un convertisseur alternatif/continu réversible, l'ensemble étant commandé par une unité électronique dédiée reliée par ailleurs à l'unité électronique centrale de commande et de contrôle du moteur thermique du véhicule appelée dans la suite « unité de contrôle moteur ».

Lorsque le moteur thermique est en rotation, la machine électrique tournante fonctionne en mode alternateur et alimente par une tension continue redressée, via le convertisseur alternatif/continu réversible précité, une unité de stockage d'énergie du véhicule telle la batterie de celui-ci.

Lorsque le moteur thermique doit être relancé par le système d'arrêt/relance sur la base de conditions prédéfinies (vitesse de rotation du moteur thermique, action sur la pédale de frein ou d'embrayage du véhicule, ...), la machine électrique tournante réversible est activée en mode démarreur et reçoit des tensions triphasées produites par le convertisseur alternatif/continu précité à partir de la tension continue fournie par l'unité de stockage d'énergie du véhicule.

Les conditions de relance du moteur thermique sont définies, en particulier, par l'état de capteurs associés aux différentes pédales du véhicule concomitamment à un ensemble d'autres paramètres représentatifs de l'état du moteur thermique et du véhicule. Par exemple, et de manière non limitative, un ensemble de capteurs équipent au moins les pédales d'embrayage et de frein, ainsi que le levier de changement de vitesse. Ces capteurs, qu'il s'agisse de capteurs de position, de capteurs de fin de course, ou de capteurs d'effort (pour le levier de changement de vitesse), fournissent à l'unité électronique de commande du système d'arrêt/relance des informations concernant l'état du dispositif concerné (pédale pressée ou relâchée, position du levier de changement de vitesse, action récente sur ce dernier, etc....). Sur la base de ces informations d'état, et par comparaison et échange de données avec l'unité de contrôle moteur, l'unité électronique du système d'arrêt/relance commande ou non un fonctionnement de la machine électrique tournante en mode démarreur, permettant ou non la relance du moteur thermique. Dans la pratique, une condition importante déterminant une éventuelle relance du moteur thermique est que le conducteur relâche la pédale d'embrayage ou la pédale de frein, l'une de celles-ci au moins étant pressée dans la situation d'arrêt du moteur thermique commandé par le système d'arrêt/relance.

Lorsqu'un système d'arrêt/relance du moteur thermique tel qu'il vient d'être sommairement décrit équipe un véhicule doté d'une boîte de vitesse automatique ou robotisée, les paramètres définissant les conditions d'arrêt, et, surtout, de relance du moteur thermique sont bien maîtrisés par l'ensemble des dispositifs de gestion des commandes du moteur thermique et de la boîte de vitesse.

En revanche, la mise en oeuvre d'un tel système d'arrêt/relance sur un véhicule muni d'une boîte de vitesse manuelle peut s'avérer plus délicate, en particulier en termes de mise en place d'une stratégie reproductible et fiable de relance du moteur thermique. En effet, les conducteurs ayant des habitudes de conduite différentes, les informations d'état combinées fournies par les capteurs équipant les pédales et/ou le levier de changement de vitesse peuvent, dans certains cas, s'avérer délicates à interpréter.

Un autre problème qui se pose dans le cadre d'une telle mise en oeuvre est la difficulté que peut avoir le système d'arrêt/relance moteur dans certain cas à relancer automatiquement le moteur thermique lorsque un calage de celui est intervenu lors d'une précédente tentative.

Un tel cas peut se produire dans la situation où le moteur thermique étant arrêté par le système d'arrêt/relance et la pédale de frein ou d'embrayage étant pressée, la pédale d'embrayage ou de frein est relâchée de manière trop brusque alors qu'une vitesse a été préalablement engagée par le conducteur (situation dans laquelle le véhicule est en attente devant un feu tricolore, par exemple). Le système d'arrêt/relance amorcera alors une opération de relance du moteur thermique qui se traduira par le calage du moteur thermique, la chaîne de traction étant en prise, et un blocage du rotor de la machine électrique tournante alors que celle-ci est alimentée. La machine électrique tournante se met alors en sécurité thermique pour une durée imposée par une temporisation prédéterminée. Le système d'arrêt/relance moteur reste indisponible pendant toute la durée de cette temporisation et le conducteur n'a d'autre choix que de procéder à un démarrage classique à la clé de contact qui commande alors l'actionnement d'un démarreur additionnel généralement prévu dans les systèmes d'arrêt/relance moteur.

Afin d'éviter au maximum au conducteur ce type de désagrément, il serait souhaitable de perfectionner le traitement de mise en sécurité thermique de la machine électrique tournante de manière à disposer d'une meilleure évaluation de l'état de suréchauffement réel de la machine et d'être ainsi en mesure de décider d'une mise en sécurité thermique de celle-ci dans des conditions plus restrictives. Cet enclenchement de la sécurité thermique dans des conditions plus restrictives contribuerait à accroître la disponibilité du système d'arrêt/relance moteur.

Le document FR 2 797 530 est une contribution en ce sens.

Selon un premier aspect, la présente invention fournit un procédé de protection thermique d'un système d'arrêt/relance automatique du moteur thermique d'un véhicule automobile en phase de démarrage du moteur thermique. Le système comprend une machine électrique tournante couplée mécaniquement au moteur thermique et une unité électronique de commande, le procédé comportant un enclenchement de la protection thermique à partir d'une comparaison d'une vitesse de rotation de la machine électrique à un gabarit de vitesse de rotation et une limitation du fonctionnement de la machine électrique consécutivement à l'enclenchement de la protection thermique.

Conformément à l'invention, un enclenchement de la protection thermique est décidé par l'unité électronique de commande lorsque la vitesse de rotation de la machine électrique a été inférieure à un gabarit de vitesse minimum prédéterminé pendant une durée cumulée au moins égale à une durée de seuil de décision prédéterminée, la durée cumulée représentant un cumul de durées d'intrusions successives de la vitesse de rotation en dessous du gabarit de vitesse minimum prédéterminé pendant une même opération de démarrage.

Selon une autre caractéristique, la protection thermique comporte une limitation du fonctionnement de la machine électrique tournante pendant la durée d'une temporisation prédéterminée. La limitation de l'utilisation de la machine électrique tournante peut être une désactivation totale de la machine pendant la durée de la temporisation.

Selon l'invention, le gabarit de vitesse minimum est défini entre un premier instant auquel intervient un ordre de démarrage du moteur thermique et un second instant auquel intervient la fin d'une durée maximum de démarrage. Le gabarit comporte une portion croissante avec une pente positive finie et une portion à front raide avec une pente positive infinie.

Selon l'invention, la durée cumulée est calculée sur une ou plusieurs périodes de temps successives pendant lesquelles la vitesse de rotation de la machine électrique a été inférieure au gabarit de vitesse minimum.

Selon un autre aspect, la présente invention fournit un système d'arrêt/relance automatique du moteur thermique d'un véhicule automobile pour la mise en oeuvre du procédé tel que décrit brièvement ci-dessus.

Selon une forme de réalisation particulière, le système d'arrêt/relance automatique selon l'invention comprend une machine électrique tournante réversible de type alterno-démarreur et un convertisseur alternatif-continu réversible. Selon une autre forme de réalisation, le système comprend une machine électrique tournante sous la forme d'un démarreur.

Selon un autre aspect, l'invention concerne aussi un véhicule automobile à boite de vitesse automatique ou manuelle équipé d'un système d'arrêt/relance automatique du moteur thermique d'un véhicule automobile tel que décrit brièvement ci-dessus.

D'autres caractéristiques et avantages de l'invention ressortiront à la lecture de la description suivante d'un de ses modes de réalisation, en référence aux figures ci-dessous, dans lesquelles :
- la Fig.1 est une vue schématique de différents éléments constitutifs d'une forme de réalisation particulière d'un système d'arrêt/relance automatique du moteur thermique d'un véhicule automobile ;
- la Fig.2 montre une courbe typique de la vitesse de rotation du rotor d'une machine électrique tournante réversible incluse dans le système de la Fig.1 lorsque le démarrage du moteur thermique se déroule dans de bonnes conditions;
- la Fig.3 montre une situation de calage du moteur thermique avec mise en sécurité thermique de la machine électrique tournante réversible dans un système d'arrêt/relance moteur selon la technique antérieure;
- la Fig.4 montre un traitement de détection selon un mode de réalisation du procédé de la présente invention effectué par une unité électronique de commande du système de manière à détecter un état de suréchauffement de la machine électrique tournante réversible ; et
- la Fig.5 montre une situation de calage du moteur thermique sans mise en sécurité thermique de la machine électrique tournante réversible dans le système d'arrêt/relance moteur de la Fig.1.

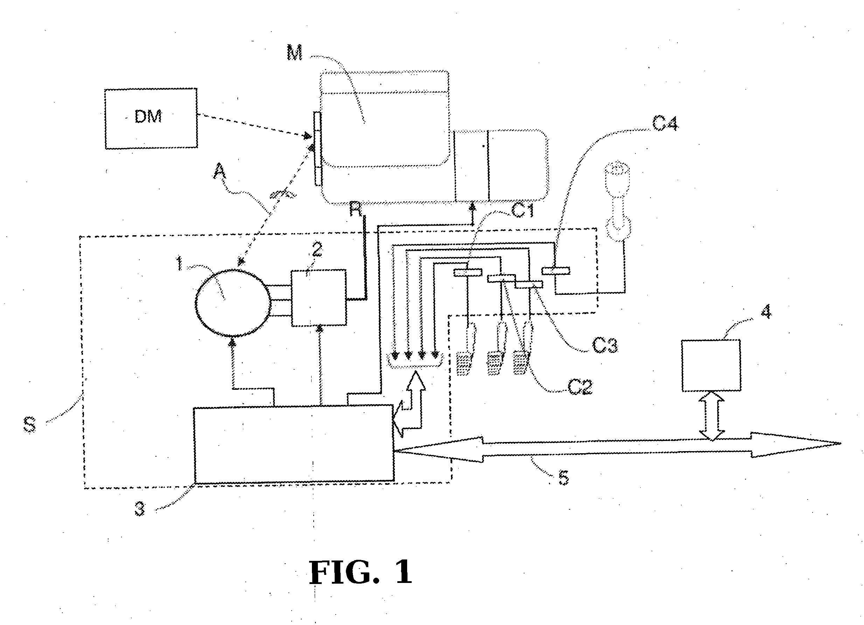

En référence à la Fig.1, il est décrit un système d'arrêt/relance S du moteur thermique M dans une forme de réalisation pour boîte de vitesse manuelle. Le système S comporte une machine électrique tournante réversible 1, de type alterno-démarreur, couplée au moteur M par une courroie de transmission A (représentée schématiquement sur la Fig.1 par une double flèche en trait discontinu), un convertisseur alternatif/continu réversible 2, et une unité électronique de commande 3. L'unité électronique de commande 3 échange des informations avec l'unité de contrôle moteur 4 à laquelle elle est reliée par des moyens de communication connus, représentés par la double flèche 5 sur la Fig.1.

Comme montré également à la Fig.1, un démarreur auxiliaire DM est prévu de manière à pouvoir démarrer le moteur thermique M en cas d'indisponibilité de la machine électrique tournante réversible 1.

Aussi longtemps que le moteur M du véhicule n'est pas à l'arrêt, l'unité électronique 3 commande le fonctionnement de la machine électrique tournante réversible 1 en mode alternateur : celle-ci génère alors des tensions triphasées qui sont converties par le convertisseur alternatif/continu réversible 2 en une tension continue redressée apte à alimenter un réseau R d'équipements électriques de bord du véhicule comprenant la batterie au plomb du véhicule et éventuellement une unité de stockage d'énergie de type supercondensateur (non représentée sur la Fig.1), dans le cas par exemple où une fonctionnalité de freinage récupératif est prévue dans le système.

Lorsque le système d'arrêt/relance du moteur a déclenché un arrêt et que ledit moteur à l'arrêt doit être relancé, l'unité électronique 3 commande le fonctionnement de la machine électrique tournante réversible 1 en mode démarreur : celle-ci est alors alimentée par des tensions triphasées générées par le convertisseur alternatif/continu réversible 2 à partir de la tension continue de bord.

La relance du moteur est, de manière connue, commandée par l'unité électronique 3 sur la base combinée d'informations reçues de l'unité de contrôle moteur 4 et d'informations envoyées par un ensemble de capteurs Cn placés sur les pédales d'embrayage, de frein, et/ou d'accélération du véhicule, et/ou associés au levier de changement de vitesse. Dans l'exemple de réalisation montré à la Fig.1, des capteurs C1, C2, C3 sont ainsi respectivement associés aux pédales d'embrayage, de frein, et d'accélération, et un capteur C4 est associé au levier de changement de vitesse. Une relance du moteur M sera alors généralement demandée à l'unité électronique 3 et à l'unité de contrôle moteur 4 lorsque, par exemple, alors que le moteur est arrêté et que la pédale de frein et/ou la pédale d'embrayage est(sont) pressée(s), le capteur correspondant à l'une de ces pédales enregistre une course de ladite pédale de sa position pressée vers sa position relâchée, course correspondant à un relâchement de ladite pédale.

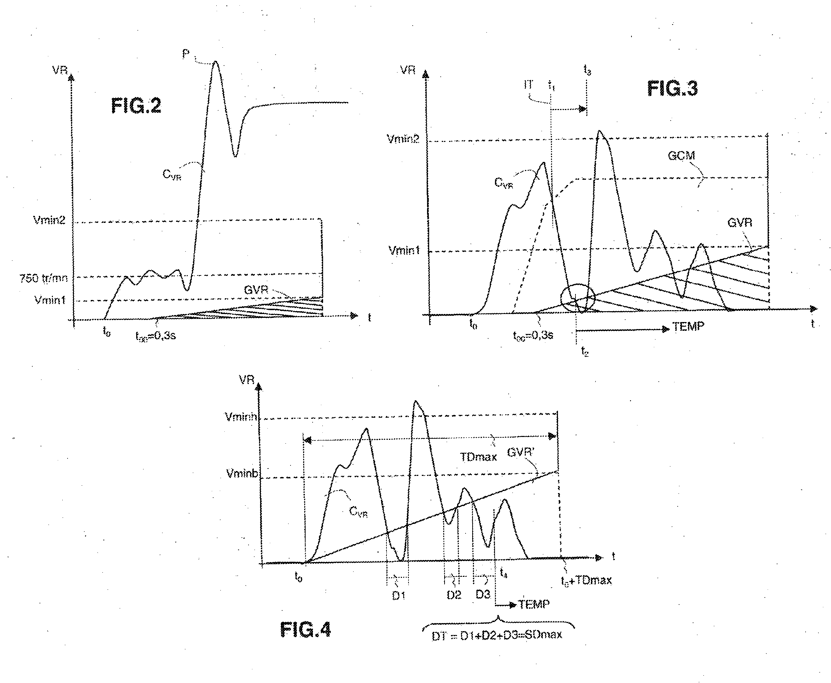

La Fig.2 montre un exemple de courbe C_{VR} de la vitesse de rotation VR du rotor de la machine électrique tournante 1 dans le cas d'un démarrage normal du moteur thermique M.

A un instant t₀, un ordre de démarrage est fourni par l'unité de contrôle moteur 4 et consécutivement la machine électrique tournante 1 est alimentée en mode démarreur. Des seuils de gabarit de vitesse Vmin1 et Vmin2 sont franchis et la vitesse VR passe par un pic P avant de se stabiliser à un régime de ralenti. Autour de 750 tr/mn, la courbe C_{VR} présente un palier comportant une ondulation correspondant aux compressions des différents cylindres du moteur M.

Dans l'exemple de la Fig.2, à un instant t₀₀=0,3s après l'ordre de démarrage intervenant à un instant t₀, est enclenché un gabarit GVR définissant une zone de vitesse de rotation du rotor anormalement basses compte tenu du temps écoulé depuis l'ordre de démarrage. La zone de vitesse du gabarit GVR est montrée par des hachures à la Fig.2.

Conformément à la technique antérieure, si la courbe de vitesse de rotation C_{VR} du rotor vient dans la zone GVR, cela signifie que le rotor ne tourne pas à une vitesse normale du fait d'un couple résistant anormalement élevé qui est produit par la chaîne de traction en prise. La machine 1 se met alors en sécurité thermique suite au suréchauffement découlant du blocage du rotor.

Une description complète des détections de défauts effectuées par l'unité de contrôle moteur 4 et l'unité électronique de commande 3 dans la situation ci-dessus est faite ci-dessous en référence à la Fig.3.

Outre le gabarit de vitesse GVR, la Fig.3 montre un autre gabarit de vitesse GCM utilisé par l'unité de contrôle moteur 4 pour détecter un défaut de démarrage du moteur M. Comme cela apparaît à la Fig.3, le gabarit de vitesse GCM est plus haut en vitesse que le gabarit GVR. Par conséquent, la détection du défaut par l'unité de contrôle moteur 4 intervient à un instant t1 qui est antérieur à l'instant t2 auquel intervient la détection du défaut par l'unité électronique de commande 3.

A l'instant t1, l'unité de contrôle moteur 4 a l'information d'une vitesse de rotation anormalement basse. L'unité de contrôle moteur 4 lance alors un ordre d'interruption IT du démarrage du moteur M afin d'interrompre l'alimentation des enroulements statoriques de la machine électrique tournante 1 et d'arrêter ainsi l'opération de démarrage. Du fait du temps de traitement, l'ordre IT ne peut être pris en compte qu'à un instant t3.

Dans l'état de la technique, cet instant t3 peut intervenir après l'instant t2 de détection par l'unité électronique de commande 3 du défaut de démarrage au moyen du gabarit GVR. Lorsque l'instant t3 intervient effectivement après l'instant t2, la machine électrique tournante 1 est déjà désactivée et placée dans un état de sécurité thermique par l'unité électronique de commande 3, et cela pour la durée d'une temporisation TEMP. Le système d'arrêt/relance moteur S est alors indisponible pendant toute la durée de la temporisation TEMP et un démarrage du moteur thermique M ne pourra intervenir qu'au moyen de la clé de contact et du démarreur auxiliaire DM.

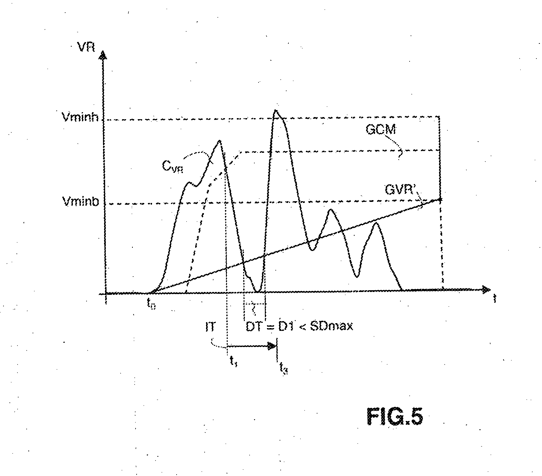

En référence maintenant aux Figs.4 et 5, une description complète des détections de défauts effectuées par l'unité de contrôle moteur 4 et l'unité électronique de commande 3 dans le cas de la mise en oeuvre du procédé selon l'invention est maintenant effectuée ci-dessous.

En référence à la Fig.4, la détection d'un suréchauffement de la machine électrique 1 par l'unité électronique de commande 3 est d'abord décrite.

Dans ce mode de réalisation du procédé selon l'invention, il est fait appel à un gabarit de vitesse GVR' dont le point de départ est l'instant t₀ auquel intervient l'ordre de démarrage du moteur thermique M.

Le gabarit a une pente positive entre les instants t₀ et t₀+TDmax correspondant respectivement à des vitesses VR=0 et VR=Vminb. La durée TDmax est une durée maximum acceptée pour une opération de démarrage du moteur thermique M. Au-delà de cette durée TDmax, comme montré à la Fig.4, le gabarit GVR' comporte une portion à pente positive infinie qui conduira à la détection d'un défaut de démarrage si au temps t₀+TDmax la vitesse de rotation VR du rotor n'est pas supérieure à une vitesse Vminh du gabarit GVR'. Bien entendu, les valeurs des paramètres TDmax, Vminb et Vminh définissant le gabarit GVR' sont fixées par l'homme du métier en fonction de l'application et peuvent être déterminées par celui-ci au moyen d'essais.

A la Fig.4, il est montré des première, seconde et troisième intrusions de la courbe de vitesse C_{VR} dans la zone de vitesse du gabarit GVR'. Ces première, seconde et troisième intrusions ont des durées respectives D1, D2 et D3,

Conformément au procédé de l'invention, une mise en sécurité thermique de la machine électrique M est décidée si pendant l'opération de démarrage, entre les instants t₀ et t₀+TDmax, la durée DT = D1+D2+D3+...+Dn représentant le cumul des durées des intrusions successives est supérieure ou égale à une durée maximale SDmax. La durée maximale SDmax est déterminée par l'homme du métier de manière à éviter toute détérioration de la machine électrique 1 suite à un échauffement de celle-ci.

A la Fig.4, il est considéré que D1+D2+D3 = SDmax. Il s'ensuit que la mise en sécurité thermique de la machine électrique 1 par l'unité 3 est décidée à un instant t4 où l'égalité se vérifie. La machine électrique 1 est alors désactivée pendant la durée de la temporisation TEMP destinée à permettre un refroidissement de la machine électrique 1.

Conformément au procédé selon l'invention, la décision de mise en sécurité thermique de la machine électrique 1 ne repose plus sur une simple intrusion de la courbe de vitesse C_{VR} dans la zone de vitesse du gabarit de vitesse. Cette décision repose sur une durée d'intrusion cumulée qui reflète plus fidèlement l'état de suréchauffement de la machine électrique 1 suite au blocage de son rotor.

En référence à la Fig.5, la détection effectuée par l'unité de contrôle moteur 4 reste identique à celle décrite en référence à la Fig.3. A l'instant t1, l'unité de contrôle moteur 4 détecte un défaut de démarrage à travers une vitesse de rotation VR inférieure à son gabarit GCM. L'unité de contrôle moteur 4 lance alors l'ordre d'interruption de démarrage IT afin d'interrompre l'alimentation des enroulements statoriques de la machine électrique 1 et d'arrêter ainsi l'opération de démarrage du moteur M. Compte tenu du temps de traitement, l'ordre IT ne peut être pris en compte qu'à l'instant t3. A l'instant t3, du fait de la mise en oeuvre du procédé selon l'invention, bien que la courbe de vitesse CVR soit venue en intrusion dans la zone de vitesse du gabarit GVR', l'unité électronique de commande 3 n'a pas encore pris la décision de mettre en sécurité thermique la machine électrique 1. L'ordre IT est donc pris en compte par l'unité électronique de commande 3 qui commande la désactivation de la machine électrique 1 en coupant l'alimentation des enroulements statoriques de celle-ci. Le traitement de détection de défaut de démarrage effectué par l'unité électronique de commande 3 ne conduira pas ici à une mise en sécurité thermique de la machine 1 comme cela aurait été le cas dans la technique antérieure. Par conséquent, grâce à l'invention, la disponibilité du système d'arrêt / relance moteur est améliorée.

Bien entendu, l'invention ne se limite pas au mode de réalisation avec un alterno-démarreur qui vient d'être décrit, pour un véhicule à boîte de vitesse manuelle. L'invention est applicable également dans un véhicule sans alterno-démarreur, mais équipé de la fonction arrêt/relance automatique du moteur thermique au moyen d'un démarreur renforcé autorisant un usage plus intensif qu'un démarreur classique. Dans le cas d'un véhicule avec boîte de vitesse manuelle, que ce soit avec un alterno-démarreur ou un démarreur renforcé, l'invention, outre le fait d'apporter une estimation plus précise de l'état de suréchauffement effectif de la machine électrique tournante, a pour avantage d'améliorer sensiblement la disponibilité du système d'arrêt/relance moteur comme décrit plus haut, en limitant les situations d'indisponibilité du système suite à un relâché de pédale intempestif.

L'invention est aussi applicable dans un véhicule à boîte de vitesse automatique. L'estimation plus précise de l'état de suréchauffement effectif de la machine électrique tournante facilitant dans ce cas une optimisation du fonctionnement du système d'arrêt/relance moteur et sa disponibilité.

## Revendications

1. Procédé de protection thermique d'un système d'arrêt/relance automatique du moteur thermique d'un véhicule automobile en phase de démarrage dudit moteur thermique, ledit système comprenant une machine électrique tournante (1) couplée mécaniquement (A) audit moteur thermique (M) et une unité électronique de commande (3), ledit procédé comportant un enclenchement (t₂) de ladite protection thermique à partir d'une comparaison d'une vitesse de rotation (VR) de ladite machine électrique (M) à un gabarit de vitesse de rotation (GVR) et une limitation (TEMP) du fonctionnement de ladite machine électrique consécutivement à l'enclenchement de ladite protection thermique, **caractérisé en ce qu'**un enclenchement de ladite protection thermique est décidé (t₄) par ladite unité électronique de commande (3) lorsque ladite vitesse de rotation (VR) de la machine électrique (M) a été inférieure, pendant une même operation de démarrage (t₀ à t₀+TDmax), à un gabarit de vitesse minimum prédétermine (GVR') pendant une durée cumulée (DT) au moins égale à une durée de seuil de décision prédéterminée (SDmax), ledit gabarit de vitesse minimum (GVR') ayant une valeur croissant en fonction du temps et étant défini entre un premier instant (t₀) auquel intervient un ordre de démarrage du moteur thermique (M) et un second instant (t₀ + TDmax) auquel intervient la fin d'une durée maximum de démarrage, et ladite durée cumulée (DT) représentant un cumul de durées d'intrusions successives de ladite
vitesse de rotation (VR) en dessous dudit gabarit de vitesse minimum (GVR') entre lesdits premier instant (t₀) et second instant (t₀+TDmax).

2. Procédé selon la revendication 1, **caractérisé en ce que** ladite protection thermique comporte une limitation du fonctionnement de ladite machine électrique tournante pendant la durée d'une temporisation prédéterminée (TEMP).

3. Procédé selon la revendication 1 ou 2, **caractérisé en ce que** ladite limitation de l'utilisation de ladite machine électrique tournante est une désactivation totale de celle-ci pendant la durée de ladite temporisation.

4. Procédé selon l'une quelconque des revendications 1 à 3, **caractérisé en ce que** ledit gabarit (GVR') comporte une portion croissante avec une pente positive finie et une portion à front raide avec une pente positive infinie.

5. Procédé selon l'une quelconque des revendications 1 à 4, **caractérisé en ce que** ladite durée cumulée (DT) est calculée sur une ou plusieurs périodes de temps successives (D1, D2, D3, ... Dn) pendant lesquelles ladite vitesse de rotation (VR) de la machine électrique a été inférieure audit gabarit de vitesse minimum (GVR').

6. Système d'arrêt/relance automatique du moteur thermique d'un véhicule automobile, **caractérisé en ce qu'**il comprend des moyens adaptés à une mise en oeuvre du procédé selon l'une quelconque des revendications 1 à 5.

7. Système d'arrêt/relance automatique du moteur thermique d'un véhicule automobile selon la revendication 6, **caractérisé en ce qu'**il comprend une machine électrique tournante réversible de type alterno-démarreur (1) et un convertisseur alternatif-continu réversible (2).

8. Système d'arrêt/relance automatique du moteur thermique d'un véhicule automobile selon la revendication 6 ou 7, **caractérisé en ce qu'**il comprend une machine électrique tournante sous la forme d'un démarreur.

9. Véhicule automobile équipé d'un système d'arrêt/relance automatique du moteur thermique d'un véhicule automobile selon l'une quelconque des revendications 6 à 8.

10. Véhicule automobile selon la revendication 9, **caractérisé en ce que** ledit véhicule est équipé d'une boîte de vitesse manuelle.

## Patentansprüche

1. Wärmeschutzverfahren eines automatischen Start-Stopp-Systems des Verbrennungsmotors eines Fahrzeugs in der Anlassphase des Verbrennungsmotors, wobei das System eine rotierende elektrische Maschine (1), die mechanisch (A) mit dem Verbrennungsmotor (M) gekoppelt ist, und eine elektronische Steuereinheit (3) aufweist, wobei das Verfahren ein Einschalten (t₂) des Wärmeschutzes aufgrund eines Vergleichs einer Rotationsgeschwindigkeit (VR) der elektrischen Maschine (M) mit einer Rotationsgeschwindigkeitslinie (GVR) und eine Einschränkung (TEMP) des Betriebs der elektrischen Maschine nach dem Einschalten des Wärmeschutzes umfasst, **dadurch gekennzeichnet, dass** ein Einschalten des Wärmeschutzes von der elektronischen Steuereinheit (3) beschlossen wird (t₄), wenn die Rotationsgeschwindigkeit (VR) der elektrischen Maschine (M) während eines gleichen Startvorgangs (t₀ bis t₀+TDmax) niedriger war als eine vorgegebene Mindestgeschwindigkeitslinie (GVR') während einer kumulierten Dauer (DT), die mindestens gleich einer vorgegebenen Entscheidungsschwellendauer (SDmax) ist, wobei die Mindestgeschwindigkeitslinie (GVR') einen ansteigenden Wert in Abhängigkeit von der Zeit aufweist und zwischen einem ersten Zeitpunkt (t₀), an dem ein Startbefehl für den Verbrennungsmotor (M) erfolgt, und einem zweiten Zeitpunkt (t₀+TDmax), an dem das Ende einer maximalen Startdauer erfolgt, festgelegt wird, und wobei die kumulierte Dauer (DT) eine Kumulierung der aufeinander folgenden Intrusionen der Rotationsgeschwindigkeit (VR) unterhalb der Mindestgeschwindigkeitslinie (GVR') zwischen dem ersten Zeitpunkt (t₀) und dem zweiten Zeitpunkt (t₀+TDmax) darstellt.

2. Verfahren nach Anspruch 1, **dadurch gekennzeichnet, dass** der Wärmeschutz eine Einschränkung des Betriebs der rotierenden elektrischen Maschine während der Dauer einer vorgegebenen Verzögerung (TEMP) aufweist.

3. Verfahren nach Anspruch 1 oder 2, **dadurch gekennzeichnet, dass** die Einschränkung der Verwendung der rotierenden elektrischen Maschine eine vollständige Deaktivierung dieser Maschine während der Dauer der Verzögerung ist.

4. Verfahren nach einem der Ansprüche 1 bis 3, **dadurch gekennzeichnet, dass** die Linie (GVR') einen ansteigenden Abschnitt mit einer endlichen positiven Steigung und einen Abschnitt mit einer steilen Flanke mit einer unendlichen positiven Steigung aufweist.

5. Verfahren nach einem der Ansprüche 1 bis 4, **dadurch gekennzeichnet, dass** die kumulierte Dauer (DT) aus einer oder mehreren aufeinander folgenden Zeitspannen (D1, D2, D3, ... Dn), während derer die Rotationsgeschwindigkeit (VR) der elektrischen Maschine geringer war als die Mindestgeschwindigkeitslinie (GVR'), berechnet wird.

6. Automatisches Start-Stopp-System des Verbrennungsmotors eines Fahrzeugs, **dadurch gekennzeichnet, dass** es Mittel aufweist, die geeignet sind für eine Durchführung des Verfahrens nach einem der Ansprüche 1 bis 5.

7. Automatisches Start-Stopp-System des Verbrennungsmotors eines Fahrzeugs nach Anspruch 6, **dadurch gekennzeichnet, dass** es eine umschaltbare rotierende elektrische Maschine vom Typ Anlassergenerator (1) und einen umschaltbaren Wechselstrom-Gleichstrom-Umwandler (2) aufweist.

8. Automatisches Start-Stopp-System des Verbrennungsmotors eines Fahrzeugs nach Anspruch 6 oder 7, **dadurch gekennzeichnet, dass** es eine rotierende elektrische Maschine in Form eines Anlassers aufweist.

9. Fahrzeug, das mit einem automatischen Start-Stopp-System des Verbrennungsmotors eines Fahrzeugs nach einem der Ansprüche 6 bis 8 ausgestattet ist.

10. Fahrzeug nach Anspruch 9, **dadurch gekennzeichnet, dass** das Fahrzeug mit einem manuellen Schaltgetriebe ausgestattet ist.

## Claims

1. Method of affording thermal protection to a system for automatically stopping/restarting the combustion engine of a motor vehicle during the phase of starting the said combustion engine, the said system comprising a rotary electric machine (1) mechanically coupled (A) to the said combustion engine (M) and an electronic control unit (3), the said method comprising a triggering (t₂) of the said thermal protection on the basis of a comparison of a rotational speed (VR) of the said electric machine (M) with a rotational speed template (GVR) and a limitation (TEMP) on the operation of the said electric machine following the triggering of the said thermal protection, **characterized in that** a triggering of the said thermal protection is decided upon (t₄) by the said electronic control unit (3) when the said rotational speed (VR) of the electric machine (M) has, during one and the same starting operation (t₀ to t₀+TDmax), been below a predetermined minimum speed template (GVR') for a cumulative duration (DT) at least equal to a predetermined decision threshold duration (SDmax), the said minimum speed template (GVR') having a value increasing as a function of time and being defined between a first instant (t₀) at which a command to start the combustion engine (M) occurs and a second instant (t₀+TDmax) at which the end of a maximum starting duration occurs, and the said cumulative duration (DT) representing a cumulation of successive durations for which the said rotational speed (VR) has dropped below the said minimum speed template (GVR') between the said first instant (t₀) and second instant (t₀+TDmax).

2. Method according to Claim 1, **characterized in that** the said thermal protection comprises limiting the operation of the said rotary electric machine for the duration of a predetermined timed period (TEMP).

3. Method according to Claim 1 or 2, **characterized in that** the said limitation on the use of the said rotary electric machine is that the latter is completely deactivated for the duration of the said timed period.

4. Method according to any one of Claims 1 to 3, **characterized in that** the said template (GVR') comprises a portion increasing with a finite positive gradient and a portion with a steep front and infinite positive gradient.

5. Method according to any one of Claims 1 to 4, **characterized in that** the said cumulative duration (DT) is calculated over one or more successive time periods (D1, D2, D3, ... Dn) during which the said rotational speed (VR) of the electric machine has been below the said minimum speed template (GVR').

6. System for automatically stopping/restarting the combustion engine of a motor vehicle, **characterized in that** it comprises means suited to implementing the method according to any one of Claims 1 to 5.

7. System for automatically stopping/restarting the combustion engine of a motor vehicle according to Claim 6, **characterized in that** it comprises a reversible rotary electric machine of the alternator-starter (1) type and a reversible AC/DC converter (2).

8. System for automatically stopping/restarting the combustion engine of a motor vehicle according to Claim 6 or 7, **characterized in that** it comprises a rotary electric machine in the form of a starter.

9. Motor vehicle fitted with a system for automatically stopping/restarting the combustion engine of a motor vehicle according to any one of Claims 6 to 8.

10. Motor vehicle according to Claim 9, **characterized in that** the said vehicle is fitted with a manual gearbox.
